# EUROPEAN PATENT SPECIFICATION

(11) **EP 2 072 325 B1**
(45) Date of publication and mention of the grant of the patent: **28.12.2011**
(21) Application number: 08172640.8
(22) Date of filing: 22.12.2008
(51) Int. Cl.: B60N 2/28

(54) **Misuse prevention apparatus**
Vorrichtung zur Verhinderung eines Missbrauchs
Appareil de prévention de mauvaise utilisation

(30) Priority: 20.12.2007 GB 0724901
(43) Date of publication of application: 24.06.2009
(73) Proprietor: Britax Excelsior Limited, Hampshire SP10 3UW (GB)
(72) Inventor: Carine, David Shaun, Hampshire, SP11 6DF (GB)
(74) Representative: Bosch, Matthias

(56) References cited:
- EP-A2- 1 772 307
- US-A- 5 695 243

## Description

The present invention relates to mis-use prevention apparatus and more particularly to mis-use prevention apparatus in the context of safety apparatus for securing infants within vehicles.

In this regard, in the sphere of child seat safety, there are various types of installation available. Examples include child seats that are removably coupled to the vehicle frame through bespoke fittings (ISOFIX) and seats that are tensioned against the vehicle seat using the seat belts provided to the vehicle.

With certain seats, additional mechanisms are provided to enhance the performance of the seat. Such mechanisms may, for example, include a foot prop or a rebound bar, which when in a preferred orientation, ensure that the seat functions as intended.

European Patent Application EP 1 772 307 A2 which shows the features of the preamble of claim 1, for example, describes a child seat comprising a handle. When the child seat is positioned on a car seat so that the occupant sitting in the child seat faces the rear of the car, the handle can be propped against the backrest of the car seat and can be connected by a tether to a car member situated in the rear of the car behind the car seat.

In many cases, the additional mechanism can move between operational and non-operational positions, for example for ease of storage. There is consequently a requirement for the child carer in charge of fitting the child seat, to correctly engage the additional mechanism. In such cases, there is always the possibility that the additional mechanism is incorrectly engaged, whereby the seat can not operate as intended and where the additional mechanism might actually reduce the safety performance of the seat.

An object of the present invention is to provide apparatus for mitigating such problems associated with known installations.

According to the present invention there is provided a mis-use prevention apparatus for a child restraint system comprising:- a user activated component which is movable between first and second positions; a coupling for allowing coupling of the child restraint system within the interior of a vehicle; and means for restricting access to the coupling when the user activated component is in its first position and for allowing access to the coupling when the user activated component is in its second position.

With such apparatus, the risk of incorrect installation and/or operation of the child restraint system is minimized.

The user activated component is preferably a safety component, movable between operational and non-operational positions, the first position corresponding to the non-operational position.

The child restraint system may comprise a body, wherein the coupling is retracted into an inaccessible cavity within the body in the first position of the user activated component. In such a way, it will be impossible for the child carer to avoid noticing that something needs adjusting in order to be able to install the child restraint system in the vehicle.

Conveniently, the coupling is driven out of the body when in the second position of the user activated component. This again will enable the carer to readily identify when the user activated component is in the correct position.

Preferably, the apparatus comprises a section of belt coupled at one end to the coupling, and at another to a fixed point, the belt being acted on by a biassing element to impart tension into the belt thereby drawing it into the body.

The biassing element is preferably movable on change of position of the user activated component, movement of the user activated component from the first position to the second position reducing the tension in the belt.

Preferably, the biassing element is coupled to the belt by a drive strip, which on movement of the user activated component from the first position to the second position urges the belt out of the body. Conveniently, the drive strip is a flexible member. It may be formed of any suitable material, for example a plastics material.

Preferably, the user activated component is a handle that acts as a roll bar in the second position. The user activated component may moreover be a handle that acts as a rebound bar in the second position.

The user activated component may be a backrest adjustment mechanism for varying the inclination of a backrest component. Preferably, the coupling is coupled to the backrest adjustment mechanism by way of a sliding element connected to the coupling by way of a flexible actuator.

Conveniently, the coupling is provided with a tag which protrudes from the apparatus when the coupling itself is inaccessible. In this way, the coupling can be readily retrieved at the appropriate moment when the user activated component is in the second position.

Preferably, the child restraint system is a safety carry cot. Alternatively, the child restraint system may be a child safety seat. The invention can however be used for any child restraint system installation which requires removable coupling within a vehicle.

According to a second aspect of the present invention there is provided a mis-use prevention apparatus for a child restraint system comprising:- a user activated safety component which is movable between operational and non-operational positions; a coupling for allowing coupling of the child restraint system within the interior of a vehicle; means for restricting access to the coupling when the user activated safety component is in the non-operational position and for allowing access to the coupling when the user activated safety component is in the operational position.

An example of the present invention will now be described with reference to the following drawings, in which:-
Figure 1 shows a carry cot embodying apparatus of the present invention;
Figure 2 shows a diagrammatic view of the carry cot of Figure 1;
Figure 3 shows in detail the apparatus of the present invention; and
Figures 4 and 5 show a further embodiment of the present invention.

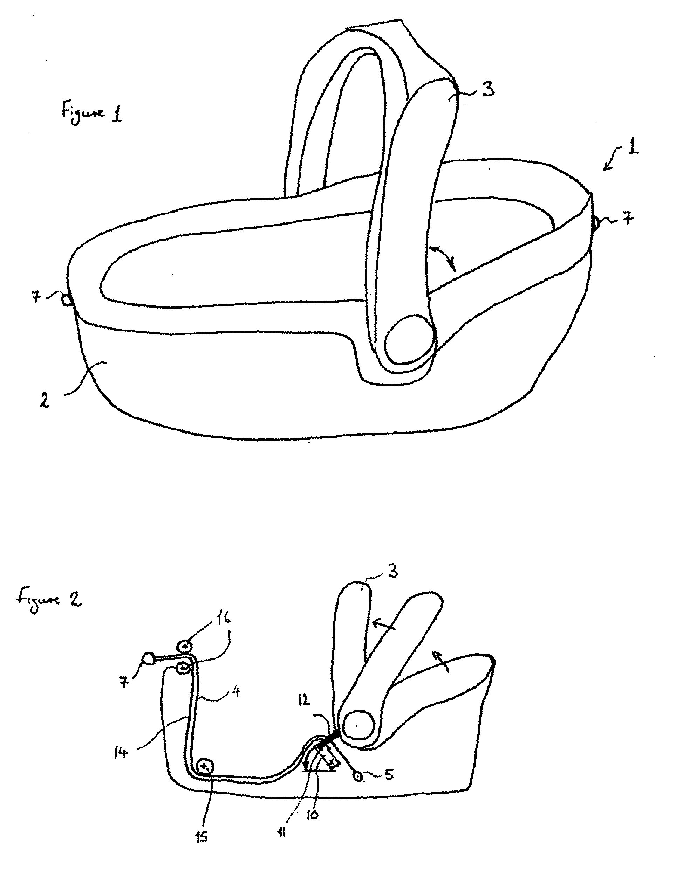

As shown in Figures 1 and 2, a safety cot 1 includes a main body 2, a handle 3 that can be pivoted between different positions. The cot is installed on the vehicle rear seat by way of couplings 7 provided at front and rear ends of the main cot body. These may be conventional D-ring couplings.

Notably, with the handle in an upright position as labeled 3 in the Figure 2, it performs as a roll bar/rebound bar, such that in the event of a collision, the bar will act to protect an infant situated within the cot 1. For the handle 3 to perform correctly in this regard, it needs to be correctly located in the upright position. In order to ensure this, a misuse prevention mechanism is provided which links the position of the handle 3 and the accessibility of the couplings 7 for fastening the carry cot 1 within the vehicle.

In this connection, when the handle 3 is not in the upright orientation, the misuse prevention mechanism retracts the couplings 7 into the cot body 2, so that access to them is restricted if not prevented. As such, they are inaccessible for coupling the cot 1 to the vehicle. In other words, in order that a carer can install the cot 1 in the vehicle, the handle 3 must first be correctly located in the upright position, whereby the couplings 7 are made accessible for fastening the cot 1 to the vehicle seat. An incorrect position of the handle 3 for its role as a rebound/roll bar is therefore considerably less likely to occur.

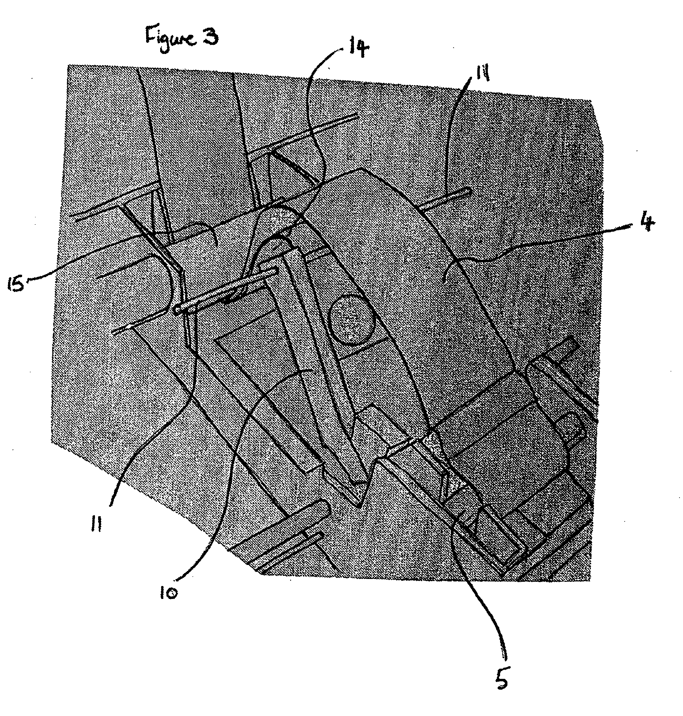

As shown in Figure 2 and 3, the mechanism comprises a section of belt 4 coupled at one end to the coupling 7, and at another to a fixed point 5. The belt 4 is biassed to be retracted into the mechanism by way of a biassing element 10. The biassing element 10 has engagement members 11 which are coupled to the handle 3 by actuator 12 so that in an upright position of the handle 3, the biassing element 10 is urged so as to release tension placed on the belt 4 thereby. As shown, the engagement members 11 engage actuator 12 driving the pivotally mounted biassing element downwardly 10.

The biassing element 10 moreover has coupled thereto a relatively stiff drive strip 14, the strip also being coupled to the belt 4. The drive strip 14 is relatively stiff in its longitudinal direction, namely a force afforded to the strip 14 at one end will be transferred along the strip 14 to its other end. In this way, as the biassing element 10 is urged downwardly to reduce tension in the belt 4, it moreover drives the drive strip 14 and hence the belt 4 coupled thereto, out of the cot body 2, thereby allowing access to the coupling 7 provided at its end.

Hence, by moving the handle 3 to an upright position, the biassing element 10 is moved so as to release the tension it exerts in the belt 4, which otherwise retracts the coupling 7 into the cot body 2. Moreover, this movement of the biassing element 10 forcibly urges the belt 4 out of the cot 1, by way of the drive strip 14, so that the coupling 7 is made available for coupling the cot 1 within the vehicle.

The belt 4 and the drive strip 14 follow a serpentine route, from the base of the cot 1, over the biassing element 10, under a roller 15, up the ends of the cot 1 and between exit rollers 16 to the coupling 7. The path of the belt 4 over the biassing element 10 ensures that there is sufficient travel of the drive strip 14 and belt 4 between the non-operational and operational positions of the safety component to fully retract the coupling 7 when in the non-operational position and to allow ready access when in the operational position.

The actuator 12 is linked to the handle 3 so that as the handle 3 is pivoted upwardly and forwardly to the upright position, the engagement members 11 move towards the biassing element 10 and urge it downwardly.

It will be apparent that such a mis-use mechanism can be used in various configurations, and is not restricted to use with a safety carry cot.

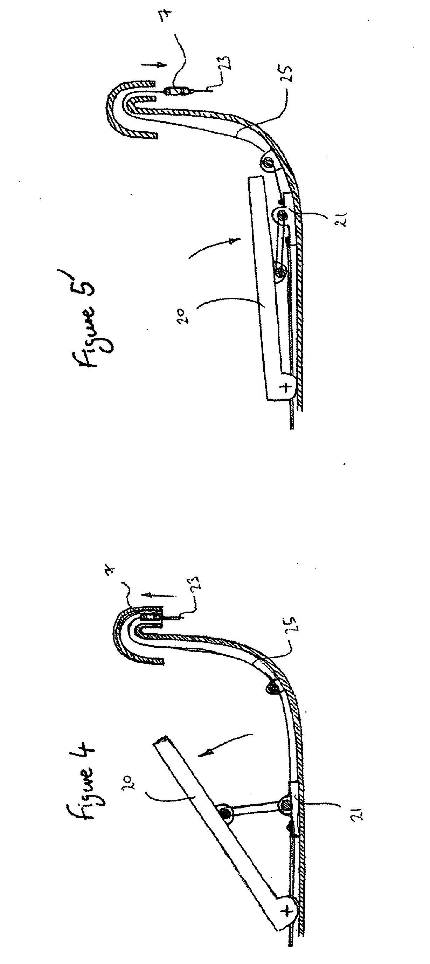

For example, in the further embodiment shown in Figures 4 and 5, such a mis-use mechanism is used in conjunction with means for raising/lowering a back rest component 20 coupled to a head pad provided within the interior of the cot. In this connection, when used to transport an infant within a vehicle, the cot is installed laterally, at 90 degrees to the longitudinal axis of the vehicle. In this condition, it is imperative to closely control movement of the occupant in the event of a sudden deceleration of the vehicle, and in particular to thereby optimize containment of the occupant's head. The mis-use mechanism sets out to ensure that safe travel environment is always available to the occupant, especially in relation to potentially harmful accelerations/decelerations of the occupant's head.

In this regard, in order for a user to have access to the couplings 7 for attaching the cot within a vehicle, it is a requirement for the back rest and head pad to be in its lowest horizontal position. This is achieved by operating a manual adjustment wheel connected to a sliding element 21, and then recovering the retracted coupling D-ring 7 by pulling on tab 23.

Further, once the cot is attached within the interior of the vehicle, any adjustment of the inclination of the back rest 20 and head pad is prohibited, as this is opposed by the installation tension afforded to the coupling 7 by its connection to the vehicle's fittings.

The head end attachment coupling 7 is coupled via webbing link 25 to the sliding element 21. Raising the back rest 20 and head pad from a horizontal position to a vertical position means that the sliding element 21 moves way from end of the cot, in so doing retracting the coupling 7. As there is insufficient positive drive to fully deploy the attachment coupling 7, a tag or ribbon 23, suitably coloured (green) in this embodiment, is provided for re-deployment of the attachment coupling by the user from its shielded location.

The action of raising the backrest hence pulls the D-ring coupling into an inaccessible cavity 26 such that the cot can not be installed in the vehicle.

Once the backrest is lowered, the D-ring coupling becomes accessible by pulling the tag ribbon 23. The slight friction created between the cavity 26 and the D-ring allows the D-ring coupling to hang in the cavity when the back rest has been lowered.

## Claims

1. A mis-use prevention apparatus for a child restraint system (1) comprising:
a user activated component (3, 20) which is movable between first and second positions;
a coupling (7) for allowing coupling of the child restraint system within the interior of a vehicle; **characterised by** comprising
means (4, 10, 11, 12, 25) for restricting access to the coupling (7) when the user activated component (3, 20) is in its first position and for allowing access to the coupling (7) when the user activated component (3, 20) is in its second position.

2. Apparatus according to claim 1, wherein the user activated component (3, 20) is a safety component, movable between operational and non-operational positions, the first position corresponding to the non-operational position.

3. Apparatus according to claim 1 or 2, wherein the child restraint system (1) comprises a body (2) and wherein the coupling (7) is retracted into an inaccessible cavity within the body (2) in the first position of the user activated component (3, 20).

4. Apparatus according to claim 3, wherein the coupling (7) is driven out of the body (2) when in the second or operational position of the user activated component (3, 20).

5. Apparatus according to claim 3 or 4, wherein the apparatus comprises a section of belt (4) coupled at one end to the coupling (7), and at another to a fixed point (5), the belt (4) being acted on by a biassing element (10) to impart tension into the belt (4) thereby drawing it into the body (2).

6. Apparatus according to claim 5, wherein the biassing element (10) is movable on change of position of the user activated component (3, 20), movement of the user activated component (3, 20) from the first position to the second position reducing the tension in the belt (4).

7. Apparatus according to any one of claims 3 to 6, wherein the biassing element (10) is coupled to the belt (4) by a drive strip (14), which on movement of the user activated component (3, 20) from the first position to the second position urges the belt (4) out of the body (2).

8. Apparatus according to claim 7, wherein the drive strip (14) is a flexible member.

9. Apparatus according to any preceding claim, wherein the user activated component is a handle (3) that acts as a roll bar in the second position.

10. Apparatus according to any preceding claim, wherein the user activated component is a handle (3) that acts as a rebound bar in the second position.

11. Apparatus according to any preceding claim, wherein the user activated component is a backrest adjustment mechanism (20, 21) for varying the inclination of a backrest component (20).

12. Apparatus according to claim 11, wherein the coupling (7) is coupled to the backrest adjustment mechanism (20, 21) by way of a sliding element (21) connected to the coupling (7) by way of a flexible actuator (25).

13. Apparatus according to claim 11 or 12, wherein the coupling (7) is provided with a tag (23) which protrudes from the apparatus when the coupling (7) is inaccessible.

14. Apparatus according to any preceding claim, wherein the child restraint system is a safety carry cot (1).

15. Apparatus according to any one of claims 1 to 13, wherein the child restraint system is a child safety seat.

## Patentansprüche

1. Vorrichtung zum Verhindern des falschen Gebrauchs für ein Kinderrückhaltesystem (1), mit:
einer benutzeraktivierten Komponente (3, 20) die zwischen ersten und zweiten Positionen bewegbar ist;
einem Kopplungsstück (7) zum Ermöglichen des Ankoppelns des Kinderrückhaltesystems im Inneren eines Fahrzeugs; **dadurch gekennzeichnet, dass** die Vorrichtung aufweist:
Einrichtungen (4, 10, 11, 12, 25) zum Einschränken des Zugriffs auf das Kopplungsstück (7), wenn sich die benutzeraktivierte Komponente (3, 20) in der ersten Position befindet, und zum Zulassen des Zugriffs auf das Kopplungsstück (7), wenn sich die benutzeraktivierte Komponente in der zweiten Position befindet.

2. Vorrichtung nach Anspruch 1, wobei die benutzeraktivierte Komponente (3, 20) eine Sicherheitskomponente ist, die zwischen Betriebs- und Nichtbetriebs-Positionen bewegbar ist, wobei die erste Position der Nichtbetriebs-Position entspricht.

3. Vorrichtung nach Anspruch 1 oder 2, wobei das Kinderrückhaltesystem (1) einen Körper (2) aufweist, und wobei das Kopplungsstück (7) in der ersten Position der benutzeraktivierten Komponente (3, 20) in einen unzugänglichen Hohlraum in dem Körper (2) zurückgezogen ist.

4. Vorrichtung nach Anspruch 3, wobei das Kopplungsstück (7) in der zweiten bzw. Betriebsposition der benutzeraktivierten Komponente (3, 20) aus dem Körper (2) gefahren wird.

5. Vorrichtung nach Anspruch 3 oder 4, wobei die Vorrichtung einen Gurtabschnitt (4) aufweist, der an einem Ende mit dem Kopplungsstück (7) und an dem anderen Ende mit einem festen Punkt (5) verbunden ist, wobei ein Vorspannungselement (10) auf den Gurt (4) wirkt, um Zug in den Gurt (4) einzubringen, wodurch er in den Körper (2) gezogen wird.

6. Vorrichtung nach Anspruch 5, wobei das Vorspannungselement (10) bei Positionsänderung der benutzeraktivierten Komponente (3, 20) bewegbar ist, wobei die Bewegung der benutzeraktivierten Komponente (3, 20) von der ersten Position in die zweite Position den Zug in dem Gurt (4) reduziert.

7. Vorrichtung nach einem der Ansprüche 3 bis 6, wobei das Vorspannungselement (10) durch ein Antriebsband (14) mit dem Gurt (4) verbunden ist, das bei Bewegung der benutzeraktivierten Komponente (3, 20) aus der ersten Position in die zweite Position den Gurt (4) aus dem Körper (2) zwingt.

8. Vorrichtung nach Anspruch 7, wobei das Antriebsband (14) ein flexibles Element ist.

9. Vorrichtung nach einem der vorhergehenden Ansprüche, wobei die benutzeraktivierte Komponente ein Griff (3) ist, der in der zweiten Position als Überrollbügel fungiert.

10. Vorrichtung nach einem der vorhergehenden Ansprüche, wobei die benutzeraktivierte Komponente ein Griff (3) ist, der in der zweiten Position als Abprallbügel fungiert.

11. Vorrichtung nach einem der vorhergehenden Ansprüche, wobei die benutzeraktivierte Komponente ein Rückenlehnen-Einstellmechanismus (20, 21) zum Variieren der Neigung einer Rückenlehnenkomponente (20) ist.

12. Vorrichtung nach Anspruch 11, wobei das Kopplungsstück (7) mittels eines Gleitelements (21) mit dem Rückenlehnen-Einstellmechanismus (20, 21) verbunden ist, das mittels eines flexiblen Aktuators (25) mit dem Kopplungsstück (7) verbunden ist.

13. Vorrichtung nach Anspruch 11 oder 12, wobei das Kopplungsstück (7) mit einer Lasche (23) versehen ist, die von der Vorrichtung vorsteht, wenn das Kopplungsstück (7) unzugänglich ist.

14. Vorrichtung nach einem der vorhergehenden Ansprüche, wobei das Kinderrückhaltesystem eine Sicherheits-Babytragetasche (1) ist.

15. Vorrichtung nach einem der Ansprüche 1 bis 13, wobei das Kinderrückhaltesystem ein Kindersitz ist.

## Revendications

1. Appareil de prévention d'une mauvaise utilisation pour un système de retenue pour enfant (1) comprenant :
un composant activé par un utilisateur (3, 20) qui est mobile entre une première et une deuxième positions ;
un couplage (7) pour permettre un couplage du système de retenue pour enfant au sein de l'intérieur d'un véhicule ; **caractérisé en ce que** comprenant
des moyens (4, 10, 11, 12, 25) pour limiter un accès au couplage (7) lorsque le composant activé par un utilisateur (3, 20) est dans sa première position et pour permettre un accès au couplage (7) lorsque le composant activé par un utilisateur (3, 20) est dans sa deuxième position.

2. Appareil selon la revendication 1, dans lequel le composant activé par un utilisateur (3, 20) est un composant de sécurité, mobile entre des positions opérationnelle et non opérationnelle, la première position correspondant à la position non opérationnelle.

3. Appareil selon la revendication 1 ou 2, dans lequel le système de retenue pour enfant (1) comprend un corps (2) et dans lequel le couplage (7) est rétracté dans une cavité inaccessible à l'intérieur du corps (2) dans la première position du composant activé par un utilisateur (3, 20).

4. Appareil selon la revendication 3, dans lequel le couplage (7) est sorti du corps (2) dans la deuxième position ou position opérationnelle du composant activé par un utilisateur (3, 20).

5. Appareil selon la revendication 3 ou 4, dans lequel l'appareil comprend une section de ceinture (4) couplée à une extrémité au couplage (7), et à une autre à un point fixe (5), la ceinture (4) recevant une action d'un élément de poussée (10) pour impartir une tension à la ceinture (4), la tirant ainsi dans le corps (2).

6. Appareil selon la revendication 5, dans lequel l'élément de poussée (10) est mobile sur un changement de position du composant activé par un utilisateur (3, 20), un mouvement du composant activé par un utilisateur (3, 20) de la première position à la deuxième position réduisant la tension dans la ceinture (4).

7. Appareil selon l'une quelconque des revendications 3 à 6, dans lequel l'élément de poussée (10) est couplé à la ceinture (4) par une bande d'entraînement (14), qui, lors d'un mouvement du composant activé par un utilisateur (3, 20) de la première position à la deuxième position, fait sortir la ceinture (4) du corps (2).

8. Appareil selon la revendication 7, dans lequel la bande d'entraînement (14) est un élément flexible.

9. Appareil selon une quelconque revendication précédente, dans lequel le composant activé par un utilisateur est une poignée (3) qui agit comme un arceau de sécurité dans la deuxième position.

10. Appareil selon une quelconque revendication précédente, dans lequel le composant activé par un utilisateur est une poignée (3) qui agit comme un arceau anti-rebond dans la deuxième position.

11. Appareil selon une quelconque revendication précédente, dans lequel le composant activé par un utilisateur est un mécanisme d'ajustement de dossier (20, 21) pour faire varier l'inclinaison d'un composant de dossier (20).

12. Appareil selon la revendication 11, dans lequel le couplage (7) est couplé au mécanisme d'ajustement de dossier (20, 21) au moyen d'un élément coulissant (21) connecté au couplage (7) au moyen d'un actionneur flexible (25).

13. Appareil selon la revendication 11 ou 12, dans lequel le couplage (7) est prévu avec un marqueur (23) qui fait saillie de l'appareil lorsque le couplage (7) est inaccessible.

14. Appareil selon une quelconque revendication précédente, dans lequel le système de retenue pour enfant est un lit-auto de sécurité (1).

15. Appareil selon l'une quelconque des revendications 1 à 13, dans lequel le système de retenue pour enfant est un siège de sécurité pour enfant.
